# FASCICULE DE BREVET EUROPEEN

(11) **EP 2 171 324 B1**
(45) Date de publication et mention de la délivrance du brevet: **21.12.2011**
(21) Numéro de dépôt: 08806049.6
(22) Date de dépôt: 19.06.2008
(51) Int. Cl.: F16K 11/04

(54) **VANNE À TROIS VOIES ET GROUPE DE FILTRATION POUR PISCINES**
DREIWEGEVENTIL UND FILTEREINHEIT FÜR SCHWIMMBECKEN
THREE-WAY VALVE AND FILTRATION UNIT FOR SWIMMING POOLS

(30) Priorité: 22.06.2007 FR 0704499
(43) Date de publication de la demande: 07.04.2010
(73) Titulaire: Arbatax, 10000 Troyes (FR)
(72) Inventeur: OSTROWSKY, Laurent, F-75017 Paris (FR); QUEIREL, Benoît, F-10000 Troyes (FR)
(74) Mandataire: Marconnet, Sébastien
(86) Numéro de dépôt international: PCT/FR2008/051117
(87) Numéro de publication internationale: WO 2009/007575

(56) Documents cités:
- WO-A-2007/006971
- US-A- 4 250 920
- US-A- 5 577 274

## Description

L'invention concerne une vanne à trois voies et un groupe de filtration et d'entretien de piscines, la vanne formant un canal de circulation entre une entrée et une sortie principale et/ou secondaire, la sortie secondaire étant munie d'un clapet permettant le raccordement d'un accessoire consommateur d'eau. Une telle vanne est particulièrement utile dans son application aux piscines, pour l'alimentation d'un accessoire tel qu'un robot de nettoyage.

On utilise couramment des balais et robots de nettoyage de piscines qui consomment de l'énergie pour leur action de nettoyage, et éventuellement leur déplacement, cette énergie étant tirée de la pression d'un courant d'eau d'alimentation, cette pression étant par exemple comprise entre 1,5 et 3 bar.

On connaît déjà, d'après le document WO 2007/006971, un appareil de filtration pour piscine, dans lequel une pompe alimente un multiplicateur de débit en un courant d'eau sous pression. Ce document représente un conduit de refoulement d'une pompe qui alimente l'éjecteur d'un multiplicateur de débit. Ce conduit comporte une vanne permettant, par une commande accessible depuis l'extérieur de l'enveloppe, de transmettre une partie ou la totalité du débit de la pompe à une sortie secondaire afin qu'elle puisse être utilisée par exemple pour alimenter un balai, un robot de nettoyage, etc., avec maintien ou non d'une partie du courant transmis au multiplicateur de débit.

Le document US-4250920 décrit une valve pour un équipement de traitement de l'eau comprenant une chambre allongée divisée en sections Interconnectées par des passages entourés par des sièges de valves alignés longitudinalement.

Le document US-5577274 décrit un système de valve de vérification d'hivernage comprenant une valve de vérification cylindrique ayant une portion de sécurité creuse et une portion de boîtier.

L'invention a pour objet une vanne à trois voies particulièrement utile dans cette application, car elle permet une commande très simple du raccordement de l'accessoire. En effet, selon l'invention, la sortie secondaire de la vanne destinée au raccordement de l'accessoire, tel qu'un robot, comporte un clapet et le simple raccordement de l'accessoire provoque simultanément l'ouverture du clapet et le détournement d'une partie au moins du courant de la pompe vers l'accessoire.

Plus précisément, l'invention concerne une vanne à trois voies formant un canal de circulation entre une entrée et au moins une sortie choisie parmi une sortie principale et une sortie secondaire, la sortie secondaire étant munie d'un clapet ayant un obturateur mobile ; selon l'invention, la vanne comprend un organe de commutation commandé par l'obturateur mobile du clapet et mobile entre une première position dans laquelle l'obturateur mobile du clapet est fermé et l'organe de commutation dégage pratiquement la section du canal de circulation formé entre l'entrée et la sortie principale, et une seconde position dans laquelle l'obturateur mobile du clapet est ouvert et l'organe de commutation est disposé dans le canal de circulation formé entre l'entrée et la sortie principale afin qu'il réduise au moins la section de passage du canal de circulation.

De préférence, l'organe de commutation est solidaire du clapet avec lequel il se déplace. Dans une variante, l'organe de commutation est raccordé à l'obturateur du clapet par un dispositif transformateur de course, choisi parmi des dispositifs multiplicateur et démultiplicateur de course.

De préférence, le canal de circulation formé entre l'entrée et la sortie principale a une section sensiblement circulaire, et l'organe de commutation a son extrémité la plus éloignée de l'obturateur du clapet qui a une forme en demi-cercle de diamètre correspondant sensiblement à celui du canal.

De préférence, la course de l'organe de commutation est au moins égale à la moitié du diamètre du canal de circulation.

De préférence, l'organe de commutation délimite un canal en forme de coude ayant une ouverture tournée du côté de l'entrée dans la seconde position de l'organe de commutation et une ouverture tournée vers la sortie secondaire.

L'invention concerne aussi un groupe de filtration et d'entretien pour piscine, du type qui comprend un ensemble de circulation d'eau, comprenant un dispositif multiplicateur de débit alimenté par une pompe entraînée par un moteur, et un ensemble de filtration, le groupe étant du type qui comprend une vanne à trois voies disposée entre la pompe et le multiplicateur de débit ; selon l'invention, la vanne est une vanne à trois voies selon les paragraphes précédents, de sorte que le raccordement d'un accessoire à la vanne commande automatiquement la commutation de la vanne.

L'avantage de la vanne selon l'invention est que l'utilisateur, pour raccorder l'accessoire, n'a aucune opération de commande à exécuter en dehors du simple raccordement du robot, par exemple par insertion et vissage d'un embout ou par emmanchement d'un raccord rapide. De même, pour déconnecter l'accessoire, il lui suffit de retirer l'embout, car le clapet se referme automatiquement et la circulation principale vers le multiplicateur de débit est rétablie.

D'autres caractéristiques et avantages de l'invention seront mieux compris à la lecture de la description qui va suivre d'exemples de réalisation, faite en référence aux dessins annexés sur lesquels :
la Figure 1 représente en perspective sous forme éclatée les deux principaux éléments d'une vanne à trois voies selon un premier mode de réalisation de l'invention ;
la Figure 2 représente en perspective l'embout de raccordement d'un accessoire à alimenter en eau, tel qu'un robot de nettoyage ;
la Figure 3 montre une vue en perspective sous forme éclatée d'un embout d'un accessoire de piscine, d'une façade et d'une vanne selon un deuxième mode de réalisation de l'invention ;
les Figures 4 montrent des vues en perspective (4a), de côté (4b, 4c, 4d), et en coupe (4e) d'un obturateur et d'un dispositif de commutation réalisés en une seule pièce selon le deuxième mode de réalisation selon l'invention ;
la Figure 5 montre la position de l'ensemble obturateur/dispositif de commutation à l'intérieur de la vanne lorsque aucun accessoire de piscine n'est raccordé à la vanne ;
la Figure 6 montre la position de l'ensemble obturateur/dispositif de commutation à l'intérieur de la vanne lorsqu'un accessoire de piscine est raccordé à la vanne.

Les éléments identiques conservent la même référence d'une figure à l'autre.

Dans le mode de réalisation décrit, la vanne est destinée à être utilisée dans un appareil de filtration pour piscine du type décrit dans le document précité WO 2007/006971, entre une pompe et un multiplicateur de débit. Dans cette application, il est souhaitable que, lorsque l'accessoire, tel qu'un robot de nettoyage, est alimenté, une partie du débit de la pompe, par exemple de l'ordre de 30 %, continue à parvenir au multiplicateur de débit. En conséquence, l'organe obturateur de la vanne de commutation, dans sa position d'alimentation de l'accessoire, laisse passer une partie du débit de la pompe.

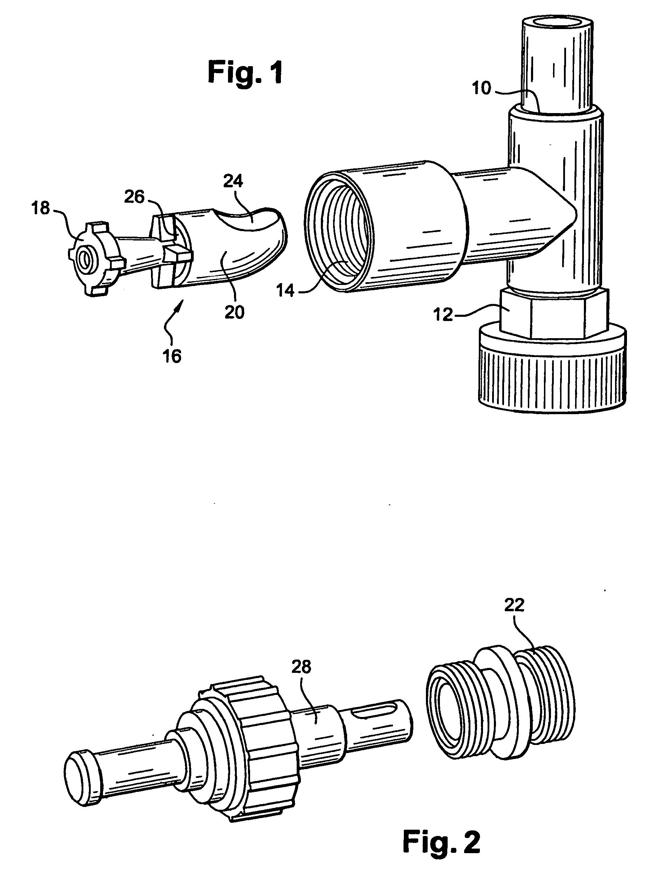

Sur la Figure 1, la vanne selon un premier mode de réalisation de l'invention a un corps en T qui comprend une entrée 10, une sortie principale 12 et une sortie secondaire 14. Le canal de circulation formé entre l'entrée 10 et la sortie principale 12 a une section circulaire.

La sortie secondaire 14 est formée à l'extrémité d'une dérivation 14.1 perpendiculaire au canal principal de circulation et dans laquelle est monté un organe 16 formant à une première extrémité l'obturateur 18 d'un clapet de fermeture et, à l'autre extrémité, un organe 20 de commutation de la vanne de circulation. L'organe 20 de commutation et l'obturateur 18 du clapet sont formés en une seule pièce dans ce mode de réalisation. Un ressort (non représenté) rappelle de manière connue l'obturateur 18 du clapet vers sa position de fermeture, c'est-à-dire la position dans laquelle l'organe de commutation est le plus éloigné du canal de circulation.

Un raccord double 22, représenté sur la Figure 2, est destiné à se visser dans le taraudage de l'extrémité 14 du corps de la vanne pour maintenir l'organe 16 à l'intérieur de la dérivation.

Sur la Figure 1, il apparaît que l'organe 20 de commutation a une extrémité de forme arrondie, de diamètre correspondant à celui de la section du canal de circulation, afin que cet organe de commutation 20 puisse venir pratiquement dans la plus grande partie de la section du canal. L'organe de commutation 20 est creux, entre une ouverture latérale 24 et des ouvertures 26 formées du côté de l'obturateur 18 du clapet.

L'organe 16 est guidé dans la dérivation 14.1 afin que son ouverture latérale 24 soit tournée vars l'entrée 10 du corps lorsque l'organe 16 est introduit au maximum dans le canal de circulation du corps.

Dans la position normale de fonctionnement, le raccord double 22, qui est vissé dans le taraudage de l'extrémité 14, maintient l'organe 16 dans le corps de vanne dans une position dans laquelle cet organe est rappelé par un ressort vers le raccord double 22 de sorte que le clapet est fermé.

Lorsqu'un accessoire de piscine tel qu'un robot de nettoyage doit être raccordé, l'embout 28 monté à l'extrémité du tuyau qui l'alimente est introduit à l'extrémité du raccord double 22, et l'embout 28 de l'accessoire pousse l'obturateur 18 du clapet afin qu'il prenne sa position d'ouverture. Dans cette course de l'obturateur 18 du clapet, l'organe 20 de commutation est poussé vers le canal de circulation et son ouverture 24 pénètre dans le canal de circulation. De préférence, l'organe 16 n'obture pas totalement ce canal. En conséquence, une partie du débit de la pompe est déviée vers la dérivation, et le reste passe vers la sortie principale.

Bien entendu, il serait possible de donner à l'organe de commutation une forme telle qu'il obture totalement le canal principal de circulation et renvoie la totalité du courant dans la dérivation. Cependant, cette disposition n'est pas avantageuse dans le cas d'un groupe de filtration de piscine.

Bien qu'on ait décrit l'obturateur 18 du clapet et l'organe 20 de commutation comme étant constitués d'un même organe, ils peuvent être séparés lorsque la course de l'obturateur du clapet et la course de l'organe de commutation doivent être différentes. Dans ce cas, un organe démultiplicateur ou multiplicateur de course peut être utilisé.

Par exemple, si la course de l'obturateur du clapet est plus importante que celle de l'organe de commutation, les deux éléments peuvent être raccordés par des bras élastiques qui permettent à l'organe de commutation de se rapprocher de l'obturateur du clapet.

Au contraire, si la course de l'obturateur du clapet est plus petite que celle de l'organe de commutation, un organe multiplicateur de course peut être disposé entre les deux organes, par exemple sous forme d'un manchon ayant des gorges hélicoïdales internes et externes qui coopèrent avec des saillies du clapet et de organe de commutation respectivement, les gorges hélicoïdales du manchon ayant des pas différents.

Bien qu'on ait représenté la vanne avec une configuration en T, elle peut avoir d'autres configurations, par exemple en étoile.

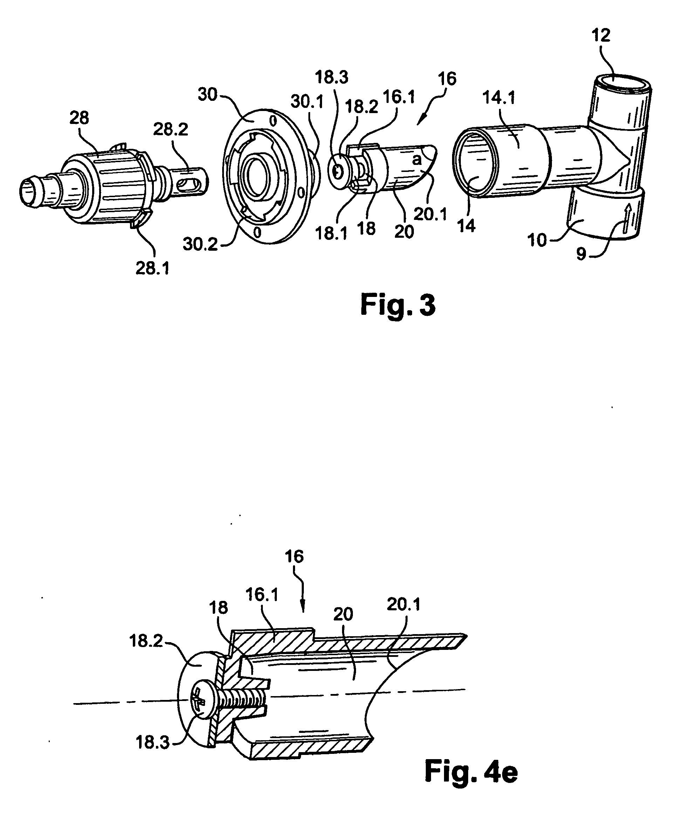

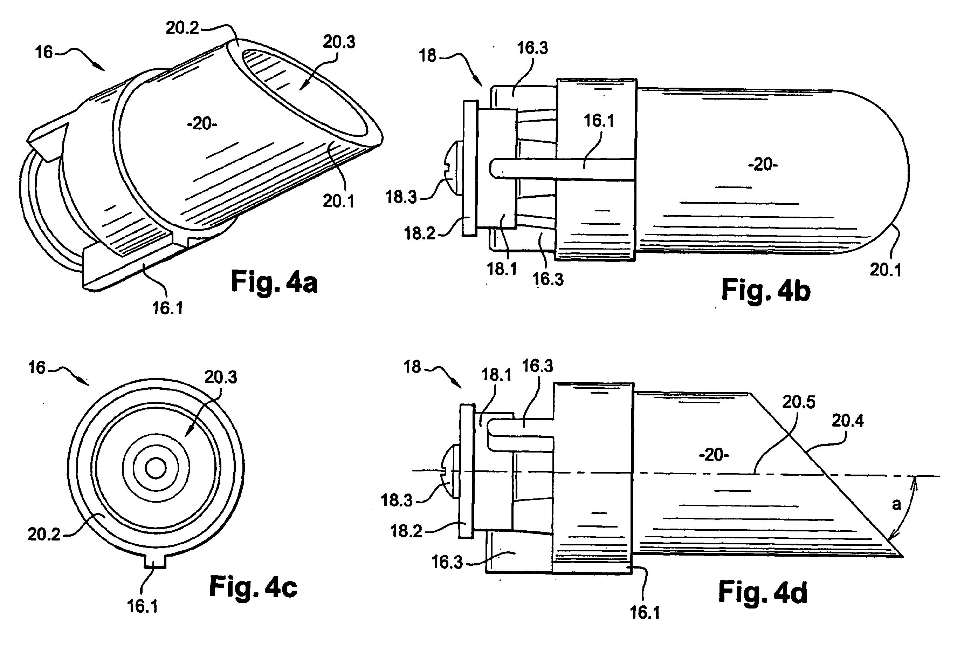

Les Figures 3 et 4 montrent un deuxième mode dé réalisation de l'organe 16 comportant un obturateur 18 et un organe 20 de commutation réalisés en un seul tenant. L'obturateur 18 est formé par un support 18.1 sur lequel est monté un joint 18.2, une vis 18.3 assurant la fixation du joint 18.2 sur le support 18.1, le joint étant bloqué entre la tête de la vis 18.3 et le support 18.1. En variante, la vis 18.3 peut être remplacée par tout autre moyen de fixation.

L'organe 20 de commutation présente une forme de cylindre creux ayant une extrémité 20.1 biseautée. La figure 4a montre ainsi que l'organe 20 présente une enveloppe cylindrique 20.2 délimitant un creux 20.3 à travers lequel le fluide est susceptible de passer lorsque l'organe se trouve à l'intérieur du canal principal. Le plan 20.4 de l'extrémité 20.1 biseautée forme un angle a compris 15 et 60 degrés avec l'axe 20.5 de l'organe 20 de commutation, a montré précisément sur la figure 4d valant de préférence 45 degrés.

L'obturateur 18 est relié à l'organe 20 de commutation par des pieds longitudinaux 16.3 espacés régulièrement les uns des autres, de sorte qu'il existe un espace entre l'obturateur 18 et l'organe 20 autorisant le passage du fluide.

L'organe 16 comporte en outre au moins une languette 16.1 destinée à entrer en coopération avec au moins une rainure 14.2 ménagée dans la face interne de la dérivation 14.1 à l'intérieure de laquelle il est destiné à être installé, de manière à pouvoir coulisser à l'intérieur de la dérivation 14.1 sans tourner sur lui-même. L'extrémité 20.1 est dirigée vers la section du canal de circulation formé entre l'entrée 10 et la sortie principale 12.

La vanne est montée solidaire avec une façade 30 en forme de disque installée du côté de la piscine. A cet effet, une extrémité 30.1 cylindrique creuse de la façade 30 est vissée à l'intérieur du taraudage de l'extrémité 14. L'extrémité 30.1 pénètre à l'intérieur de la dérivation 14.1 de manière à assurer le maintien de l'organe 16 à l'intérieur de la dérivation 14.1.

La Figure 3 montre également un embout 28 monté à l'extrémité d'un tuyau alimentant un accessoire de piscine, cet embout 28 comportant des crabots 28.1 destinés à coopérer avec des fentes 30.2 ménagées sur la façade 30. L'embout 28 comporte également une protubérance 28.2 allongée et creuse destinée à déplacer en translation l'organe 16 lorsque l'embout 28 est introduit à l'intérieur du canal secondaire.

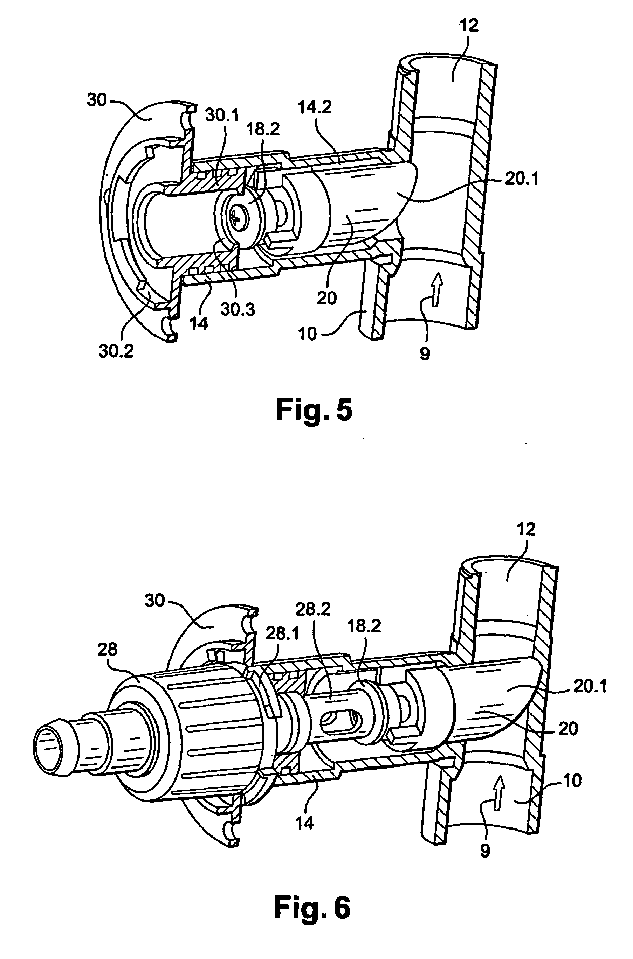

Comme représenté sur la Figure 5, dans la position de repos, lorsque aucun accessoire de piscine n'est raccordé à la vanne, le fluide circulant dans le canal principal (suivant la flèche 9 de l'entrée 10 vers la sortie 12) exerce une pression sur l'organe 20 de commutation, de sorte que le joint 18.2 est en appui hermétique contre le rebord 30.3 de l'extrémité 30.1. Tandis que l'organe 20 de commutation est quasiment entièrement dégagé du canal principal, de sorte que la majeure partie du fluide circule dans le canal principal sans être détourné vers la dérivation 14.1.

Comme représenté sur la Figure 6, dans la position d'usage, lorsqu'un accessoire de piscine est raccordé à la vanne, l'embout 28 est branché à la sortie secondaire 14. La protubérance 28.2 pousse alors l'obturateur 18 qui coulisse à l'intérieur de la dérivation 14.1 en s'éloignant du rebord 30.3, de sorte que le joint 18.2 n'est plus en appui hermétique contre le rebord 30.3. Dans cette course, l'organe 20 de commutation est poussé vers le canal principal de circulation, son extrémité 20.1 biseautée pénétrant alors dans le canal principal, de sorte que le fluide passe par le creux de l'extrémité 20.1 pour être détourné vers la dérivation 14.1 et l'embout 28.

De préférence, dans la position d'usage, l'extrémité 20.1 de l'organe 20 n'obture pas totalement ce canal. En conséquence, une partie du débit de la pompe est déviée vers la dérivation 14.1, et le reste passe vers la sortie principale 12. A cet effet, la pointe de l'extrémité 20.1 est plate ou arrondie, de sorte que lorsque l'extrémité biseautée 20.1 est en appui contre la paroi interne cylindrique du canal principal, il existe un espace entre la paroi et l'organe 20 de commutation. En outre, il n'est pas prévu de liaison hermétique entre la paroi interne du canal principal et l'organe 20 de commutation, de sorte qu'il existe des espaces suffisants entre les pièces pour que le fluide puisse circuler en partie à l'intérieur du canal principal.

Une fois l'embout 28 engagé à l'intérieur du canal secondaire, il est craboté à la façade 30 au moyen des crabots 28.1.

Lorsque l'accessoire de piscine est débranché de la vanne, la pression exercée par le flux circulant à l'intérieur du canal principal pousse l'organe 16 vers l'extrémité de la dérivation, de sorte que l'organe 16 coulisse à l'intérieur de la dérivation pour reprendre sa position de repos automatiquement.

## Revendications

1. Vanne à trois voies formant un canal de circulation entre une entrée (10) et au moins une sortie choisie parmi une sortie principale (12) et une sortie secondaire (14), la sortie secondaire (14) étant munie d'un clapet ayant un obturateur mobile (18), comprenant un organe de commutation (20) commandé par l'obturateur mobile (18) du clapet et mobile entre
- une première position dans laquelle l'obturateur mobile (18) du clapet est fermé et l'organe de commutation (20) dégage pratiquement la section du canal de circulation formé entre l'entrée (10) et la sortie principale (12), et
- une seconde position dans laquelle l'obturateur mobile (18) du clapet est ouvert et l'organe de commutation (20) est disposé dans le canal de circulation formé entre l'entrée (10) et la sortie principale (12) afin qu'il réduise au moins la section de passage du canal de circulation, **caractérisée en ce qu'**elle comprend en outre
- des moyens (16.1, 14.2, 20.1, 20.2) pour passer automatiquement de la première position à la deuxième position lorsqu'un accessoire de piscine est branché sur la sortie secondaire (14) et pour passer automatiquement de la deuxième position à la première position lorsque l'accessoire de piscine est débranché de la sortie secondaire (14).

2. Vanne selon la revendication 1, **caractérisée en ce que** l'obturateur (18) est formé par un support (18.1) sur lequel est fixé un joint (18.2).

3. Vanne selon la revendication 2, **caractérisée en ce que** la fixation du joint (18.2) sur le support (18.1) est réalisée au moyen d'une vis (18.3).

4. Vanne selon l'une des revendications 1 à 3, **caractérisée en ce que** l'organe (20) de commutation présente une forme de cylindre creux ayant une extrémité (20.1) biseautée orientée vers la section du canal de circulation formé entre l'entrée (10) et la sortie principale (12).

5. Vanne selon la revendication 4, **caractérisée en ce que** le plan de l'extrémité (20.1) biseautée forme un angle (a) compris 15 et 60 degrés avec l'axe de l'organe (20) de commutation, l'angle (a) valant de préférence 45 degrés.

6. Vanne selon l'une des revendications 1 à 5, **caractérisée en ce que** le canal de circulation formé entre l'entrée (10) et la sortie principale (12) a une section sensiblement circulaire, et l'organe de commutation (20) a son extrémité la plus éloignée de l'obturateur (18) du clapet qui a une forme en demi-cercle de diamètre correspondant sensiblement à celui du canal.

7. Vanne selon la revendication 6, **caractérisée en ce que** la course de l'organe de commutation (20) est au moins égale à la moitié du diamètre du canal de circulation.

8. Vanne selon l'une quelconque des revendications 1 à 7, **caractérisée en ce que** l'organe de commutation (20) délimite un canal en forme de coude ayant une ouverture (24) tournée du côté de l'entrée (10) dans la seconde position de l'organe de commutation (20) et une ouverture (26) tournée vers la sortie secondaire (14).

9. Vanne selon l'une quelconque des revendications 1 à 8, **caractérisée en ce que** l'organe de commutation (20) est solidaire de l'obturateur (18) du clapet avec lequel il se déplace.

10. Vanne selon l'une quelconque des revendications 1 à 9, **caractérisée en ce que** l'organe de commutation (20) est raccordé à l'obturateur du clapet par un dispositif transformateur de course.

11. Groupe de filtration et d'entretien pour piscine, du type qui comprend un ensemble de circulation d'eau, comprenant un dispositif multiplicateur de débit alimenté par une pompe entraînée par un moteur, et un ensemble de filtration, le groupe étant du type qui comprend une vanne à trois voies disposée entre la pompe et le multiplicateur de débit, **caractérisé en ce que** la vanne est une vanne à trois voies selon l'une quelconque des revendications précédentes, de sorte que le raccordement d'un accessoire à la vanne commande automatiquement la commutation de la vanne.

## Claims

1. Three-way gate forming a circulation channel between an input (10) and at least one output selected among a main output (12) and a secondary output (14), the secondary output (14) being provided with a valve having a mobile shutter (18), including a switching device (20) controlled by the mobile shutter (18) of the valve and being mobile between
- a first position in which the mobile shutter (18) of the valve is closed and the switching device (20) virtually makes clear the section of the circulation channel formed between the input (10) and the main output (12), and
- a second position in which the mobile shutter (18) of the valve is opened and the switching device (20) is arranged in the circulation channel formed between the input (10) and the main output (12) so that it reduces at least the passage section of the circulation channel, **characterized in that** it moreover includes
- means (16.1, 14.2, 20.1, 20.2) for automatically shifting from the first position to the second position when a swimming pool accessory part is connected to the secondary output (14) and for automatically shifting from the second position to the first position when the swimming pool accessory part is disconnected from the secondary output (14).

2. Three-way gate according to claim 1, **characterized in that** the shutter (18) is formed by a support (18.1) a gasket (18.2) is fixed to.

3. Three-way gate according to claim 2, **characterized in that** the fixing of the gasket (18.2) to the support (18.1) is carried out by means of a screw (18.3).

4. Three-way gate according to any one of the claims 1 to 3, **characterized in that** the switching device (20) has the form of hollow cylinder with an beveled end (20.1) directed towards the section of the circulation channel formed between the input (10) and the main output (12).

5. Three-way gate according to claim 4, **characterized in that** the plane of the beveled end (20.1) forms an angle (a) between 15 and 60 degrees with the axis of the switching device (20), the angle (a) being preferably equal to 45 degrees.

6. Three-way gate according to any one of the claims 1 to 5, **characterized in that** the circulation channel formed between the input (10) and the main output (12) has a substantially circular section, and the most distant end of the switching device (20) from the valve shutter (18) has the form of a half-circle whose diameter substantially corresponds to that of the channel.

7. Three-way gate according to claim 6, **characterized in that** the course of the switching device (20) is at least equal to the half-diameter of the circulation channel.

8. Three-way gate according to any one of the claims 1 to 7, **characterized in that** the switching device (20) delimits a elbow-shaped channel having an opening (24) directed towards the input (10) in the second position of the switching device (20) and an opening (26) directed towards the secondary output (14).

9. Three-way gate according to any one of the claims 1 to 8, **characterized in that** the switching device (20) is integral with the valve shutter (18) with which it moves.

10. Three-way gate according to any one of the claims 1 to 9, **characterized in that** the switching device (20) is connected to the valve shutter by a course converter device.

11. Filtration and maintenance group for a swimming pool, of the type which includes a water circulation unit, including a flow multiplier device supplied by a pump driven by a motor, and a filtration unit, the group being of the type which includes a three-way gate arranged between the pump and the flow multiplier, **characterized in that** the gate is a three-way gate according to any one of the preceding claims, so that the connection of an accessory part to the gate automatically controls the commutation of the gate.

## Patentansprüche

1. Dreiwegventil, bildend einen Umlaufkanal zwischen einem Eingang (10) und wenigstens einem unter einem Hauptausgang (12) und einem sekundären Ausgang (14) ausgewählten Ausgang, wobei der sekundäre Ausgang (14) mit einer mit einer beweglichen Verschlussvorrichtung (18) versehenen Ventilklappe ausgestattet wird, wobei diese Verschlussvorrichtung ein Schaltelement (20) umfasst, welches durch die bewegliche Verschlussvorrichtung (18) der Ventilklappe gesteuert wird, und bewegbar ist, zwischen
- einer ersten Stellung, in welcher die bewegliche Verschlussvorrichtung (18) der Ventilklappe geschlossen ist, und das Schaltelement (20) praktisch die Sektion des zwischen dem Eingang (10) und dem Hauptausgang (12) gebildeten Umlaufkanals freisetzt, und
- einer zweiten Stellung, in welcher die bewegliche Verschlussvorrichtung (18) der Ventilklappe offen ist und das Schaltelement (20) im Umlaufkanal zwischen dem Eingang (10) und dem Hauptausgang (12) angeordnet ist, damit es wenigstens die Durchgangsektion des Umlaufkanals reduziert,
**dadurch gekennzeichnet, dass** es weiter umfasst:
- Mittel (16.1, 14.2, 20.1, 20.2) zur automatischen Umschaltung von der ersten Stellung zur zweiten Stellung, wenn ein Schwimmbadzubehör mit dem sekundären Ausgang (14) verbunden wird, und zur automatischen Umschaltung von der zweiten Stellung zur ersten Stellung, wenn das Schwimmbadzubehör vom sekundären Ausgang (14) ausgeschalten wird.

2. Dreiwegventil nach Anspruch 1, **dadurch gekennzeichnet, dass** die Verschlussvorrichtung (18) durch einen Träger (18.1) gebildet wird, an welchem eine Dichtung (18.2) befestigt ist.

3. Dreiwegventil nach Anspruch 2, **dadurch gekennzeichnet, dass** die Befestigung der Dichtung (18.2) am Träger (18.1) mithilfe einer Schraube (18.3) durchgeführt wird.

4. Dreiwegventil nach einem der Ansprüche 1 bis 3, **dadurch gekennzeichnet, dass** das Schaltelement (20) eine Form eines Hohlzylinders mit einem abgeschrägten, nach der Sektion des Umlaufkanals zwischen dem Eingang (10) und dem Hauptausgang (12) ausgerichteten Ende (20.1) aufweist.

5. Dreiwegventil nach Anspruch 4, **dadurch gekennzeichnet, dass** die Ebene des abgeschrägten Endes (20.1) einen Winkel (a) zwischen 15 und 60 Grade mit der Achse des Schaltelements (20) bildet, wobei der Winkel (a) vorzugsweise 45 Grade beträgt.

6. Dreiwegventil nach einem der Ansprüche 1 bis 5, **dadurch gekennzeichnet, dass** der Umlaufkanal zwischen dem Eingang (10) und dem Hauptausgang (12) eine im wesentlichen kreisförmige Sektion aufweist, und das entfernteste Ende des Schaltelements (20) zur Verschlussvorrichtung (18) der Ventilklappe eine Form eines Halbkreises aufweist, dessen Durchmesser im wesentlichen dem des Kanals entspricht.

7. Dreiwegventil nach Anspruch 6, **dadurch gekennzeichnet, dass** der Hub des Schaltelements (20) wenigstens der Hälfte des Durchmessers des Umlaufkanals entspricht.

8. Dreiwegventil nach einem der Ansprüche 1 bis 7, **dadurch gekennzeichnet, dass** das Schaltelement (20) einen knieförmigen Kanal mit einer nach dem Eingangs (10) in der zweiten Stellung des Schaltelements (20) ausgerichteten Öffnung (24) und mit einer nach dem sekundären Ausgang (14) ausgerichteten Öffnung (26) abgrenzt.

9. Dreiwegventil nach einem der Ansprüche 1 bis 8, **dadurch gekennzeichnet, dass** das Schaltelement (20) aus einem Stück mit der Verschlussvorrichtung (18) der Ventilklappe ist, mit welcher es sich bewegt.

10. Dreiwegventil nach einem der Ansprüche 1 bis 9, **dadurch gekennzeichnet, dass** das Schaltelement (20) mit der Verschlussvorrichtung der Ventilklappe durch eine Hubumsetzvorrichtung verbunden wird.

11. Filtrier- und Wartungsgruppe für ein Schwimmbad, umfassend eine Wasserumlaufeinheit mit einer durch eine motorisch angetriebene Pumpe gespeiste Durchflussverstärkervorrichtung und einer Filtriereinheit, wobei die Gruppe ein Dreiwegventil zwischen der Pumpe und dem Durchflussverstärker umfasst, **dadurch gekennzeichnet, dass** das Ventil ein Dreiwegventil nach einem der vorhergehenden Ansprüche ist, sodass die Verbindung eines Zubehörs mit dem Ventil automatisch die Ventilschaltung steuert.
